Europäisches Patentamt

(19) European Patent Office

Office européen des brevets

(11) **EP 0 954 988 A1**

(12) **EUROPEAN PATENT APPLICATION**

(43) Date of publication:
   **10.11.1999 Bulletin 1999/45**

(51) Int. Cl.⁶: **A23N 15/04**, A01D 45/00

(21) Application number: **99201292.2**

(22) Date of filing: **24.04.1999**

(84) Designated Contracting States:
   **AT BE CH CY DE DK ES FI FR GB GR IE IT LI LU
   MC NL PT SE**
   Designated Extension States:
   **AL LT LV MK RO SI**

(30) Priority: **28.04.1998 IE 980319
   24.08.1998 IE 980693**

(71) Applicant: **Hayes, John
   Kildare (IE)**

(72) Inventor: **Hayes, John
   Kildare (IE)**

(74) Representative:
   **Shortt, Peter Bernard et al
   TOMKiNS & CO.,
   5 Dartmouth Road
   Dublin 6 (IE)**

(54) **Apparatus and method for processing and packing mushrooms**

(57)    The invention concerns apparatus for picking and cutting mushrooms having at least one cutting blade (71), a blade receiving plate (72), and at least one aperture (85) in the plate (72) which receives mushroom stalks for cutting, with the caps of the mushrooms held on a top part of the plate (72) and the stem of the mushrooms extending through the aperture (85), and means for moving the plate (72) and/or the blade (71) relative to each other to cut the mushroom stalks held in the aperture (85). In one embodiment, the apparatus has a cutting head (10) including an upper plate (72), and a lower plate (73), a blade (71) mounted between the plates (72, 73) and slidable between the plates (72, 73). Each plate (72, 73) has a plurality of complementary fingers (84) which define the slots (85) therebetween. The slots (85) are dimensioned to receive a plurality of mushrooms (16) with the caps (19) resting on the upper plate (72) and the mushroom stalks (18) extending downwardly through the slots (85) in the plates (72, 73). The cutting head (10) is mounted on a pantograph frame with pivoting links, such that when the cutting head (10) is moved from a picking position to a packing position, this causes the blade (71) to move across the slots (85) to sever the mushroom stalks. The invention includes a wheeled trolley which moves along aisles between mushroom growing beds and has a seat which enables a mushroom picker to sit facing the mushroom growing beds, substantially at right-angles to the direction of travel of the trolley. Mushroom processing equiptment projects laterally from the trolley and extends over the mushroom growing beds, including a mushroom cutting device (10) as described above.

FIG. 23

## Description

### Field of the Invention

The invention relates to an apparatus and method for processing and packing mushrooms. It is particularly concerned with apparatus for handling, processing, and packing mushrooms picked by hand.

### Background of the Invention

Mushrooms are generally grown commercially in bags of compost having a diameter of 440mm and a height of 400mm. The bags are arranged in rows in the growing tunnels.

The mushrooms can picked by hand and generally two mushrooms are picked by an operator using the left hand and the stalk is cut off with a knife held in the right hand. Usually the work station that the operator uses has a seat on which the operator sits and the operator is required to propel and guide the unit along the rows. This unit is uncomfortable as the operator must sit in-line with the walking line, with legs straddling a middle bar, all the time ensuring that the legs do not brush against the sides of the mushroom bags, thereby damaging the product. The work area is not very organised and leads to inefficiencies.

The normal mode of practice is for the operator to sit perpendicular to the work. The cut mushrooms are then placed in a plastic tub for onward sale. The operator has to place the mushroom cap-up in the tub and is required to ensure that there are no pieces of peat or compost on the mushroom.

The operator further checks that each tub contains the correct weight. This usually involves picking up the tub and placing it on a scales. If it is overweight then mushrooms must be removed from the tub and if it is underweight then additional mushrooms must be added to the tub. When the tub is filled it is set aside for collection. The normal modus operandi is to place the full tubs on the ground behind the trolley, for later collection. This is a further disadvantage of the known method in that the floor of the mushroom house is usually wet, so that when a tub is placed on the ground it picks up dirt from the ground which is transferred to the mushrooms in the tub below when tubs are stacked on top of each other. This contaminates the mushrooms, leading to wastage and inefficiencies.

There are a number of other methods of growing mushrooms such as on shelves or in trays and these use similar a harvesting techniques.

The yield of mushrooms is clearly important to the grower. The top price for mushrooms is only paid to growers who present their products cap upwards and clean. It is acceptable, however, to present only the top two rows of mushrooms cap upwards.

At present a good mushroom picker would pick at a rate of 30 to 40 pounds per hour.

The ideal method of picking mushrooms must have the following features.

1. It must not damage the surface of the mushroom.

2. It must clean the mushroom for presentation and sale.

3. It must weigh the mushrooms correctly to ensure that there are no over or under weight sales tubs.

4. It must monitor the picking of mushrooms to ensure that only the correct size and weight of mushrooms are picked.

5. It must place the mushrooms correctly in the sales tub so that they are neatly arranged, with the top two rows cap up and do not fall over.

6. It must minimise the handling associated with filling the sales tubs.

7. It must improve productivity of the picker to reduce picking costs.

8. The unit must have a capital cost which is economically acceptable to the industry.

9. It must cut the stalks of the mushrooms cleanly and squarely to ensure that the maximum allowed length of stalk is achieved hence the maximum weight of mushroom.

In addition to the totally manual method described above there are a number of machines available in the market which have attempted to automate the picking of mushrooms.

One type of machine, of which there are a number sold by different manufacturers, consists of a trolley on which is mounted a conveyor consisting of two initially parallel belts between which the operator places the individual mushrooms at the feed end. These convey the mushrooms past a pair of rotating cutters which attempt to cut the mushroom stalk at the correct length. After the cutter, the belts diverge and the mushroom is conveyed to a point where its diameter is equal to the distance between the two belts whereupon it the falls through the two belts in to a sales tub beneath. When the tub is filled to the correct weight a weigh cell under the tub sets off an alarm which alerts the operator to remove the filled tub and replace it with an empty tub.

The machines in this category drop the mushrooms after cutting into the sales tubs and fail badly on presentation. They require a lot of operator intervention. They do not accurately cut stalks as the mushrooms move and pivot within the belts. They have failed to be accepted within the industry. Because of the amount of operator actions required by this type of machine, it can only achieve outputs in the region of 60 pounds of mushrooms per hour. The operator is required to manually move the unit, manually collect the empty sales tubs and stack the filled ones. There is a significant degree of dexterity required to feed the mushrooms into the gap between the two feed belts.

Another type of machine is a very sophisticated robot which scans the mushroom beds and individually picks the mushrooms, using a vacuum cup. The device places the mushrooms into a "V" shaped finger mounted on a chain, which conveys the mushroom past a cutting blade to a second vacuum cup. This places the mushroom into the sales tubs in an intelligent manner to help presentation.

Such a machine is very expensive to build and maintain. It is generally used on large farms where bulk is more important then presentation. Because the method of picking uses vacuum cups to grip the cap of each mushroom, considerable torque is required to twist and remove the mushroom from the growing bed and considerable damage to the cap of the mushroom can occur. The placing of mushrooms individually into the sales tub, leaves the mushroom unsupported, which causes the mushrooms to fall over and go out of alignment.

A further known method uses a flat conveyor belt approximately 600mm wide by 2000mm long mounted on a trolley which spans approximately 3 aisles of mushrooms. The conveyor belt has circular holes cut in it having different sizes for differently sized mushrooms. Four operators sit around the unit and place the mushrooms into these holes. The conveyor conveys the mushroom to a cutting station where a steel band saw cuts the stalks from the remainder of the mushrooms. The mushrooms then travel to the end of the belt were an operator places sales tubs to collect the different sizes mushrooms as they fall from the belt. This operator then checks the weight and when the tub is filled, places the tub on the floor for collection.

Such a machine is really only a cutter. It is difficult to feed the thick base of the mushrooms into the belt. It does not cut the mushroom accurately as there is only a small belt area supporting the back of the stalk as it passes the cutting blade.

The operators must make many hand movements not only to pick the mushrooms, but also to place the mushrooms in the conveyor belt. This slows up the operation.

## Object of the Invention

The present invention seeks to overcome the shortcomings of the above described existing machines and to provide a relatively simple machine for assisting in the picking and cutting of mushrooms and which helps to improve the productivity of the operator. It is also an object to provide a method and machine to pack the mushrooms into the sales tubs in a neat and attractive manner.

## Summary of the Invention

The invention provides apparatus for picking and cutting mushrooms comprising at least one cutting blade, a blade receiving plate, and at least one aperture or slot associated with the plate which is adapted to receive mushrooms for cutting, with the caps of the mushrooms held on a top part of the plate and the stem of the mushrooms extending through the aperture or slot, and means for moving the plate and/or the blade relative to each other to cut the mushrooms held in said aperture. Preferably there are two parallel plates which define a slot therebetween which is adapted to receive the cutting blade, and the plates are provided with a plurality of apertures or slots for receiving the mushrooms to be cut. Optionally there are a plurality of blades provided in said slot between the plates, and cutting is achieved by moving the plates relative to the blades.

The invention includes means for mounting the plate and blade assembly such that it may be extended over mushroom beds to receive the picked mushrooms in the apertures and withdrawn from the beds for removal of the picked mushrooms, the withdrawal action causing relative movement of the plates and blade to sever the mushrooms. The mounting means may include a trolley.

According to one embodiment the invention provides an apparatus for use in the picking and processing of mushrooms comprising a wheeled trolley which is adapted for movement along aisles between mushroom growing beds, a seat on the trolley which enables a mushroom picker to sit facing the mushroom growing beds, substantially at right-angles to the direction of travel of the trolley, mushroom processing equipment projecting laterally from the trolley and adapted, in use, to extend over the mushroom growing beds, said equipment including a mushroom cutting device comprising at least one cutting blade, a blade receiving plate, and at least one aperture associated with the plate which is adapted to receive mushrooms for cutting, and means for moving the plate and/or blade relative to each other to cut the mushrooms held in said aperture.

Preferably, the blade receiving plate contains a slot into which the cutting blade is received during the cutting operation.

In accordance with another embodiment the invention includes apparatus for use in picking and cutting mushrooms having a cutting head comprising an upper plate, and a lower plate, a blade mounted between the plates and slidable between the plates, wherein each plate has a plurality of complementary fingers which define slots therebetween, said slots being dimensioned to receive a plurality of mushrooms with the caps resting on the upper plate and the mushroom stalks extending downwardly through the slots in the plates, and means to move the blade across the slots to sever the mushroom stalks. Preferably, the cutting head is mounted on a pantograph frame such that it may be moved from a picking position rearwardly to a higher packing position, and the frame includes a linkage such that the upward and rearward movement of the frame causes the blade to move across the slots to sever the mushroom stalks.

Some embodiments of the present invention will now be described with reference to the accompanying drawings.

## Brief Description of the Drawings

In the accompanying drawings:

Figure 1 is a plan view of one embodiment of apparatus for picking, cutting and packing mushrooms according to the invention;

Figure 2 is a side elevation of the apparatus of Figure 1;

Figure 3 is a section on the line A - A of Figure 2;

Figure 4 is a section on the line B - B of Figure 2;

Figure 5 is a plan view of a mushroom cutting device of the invention;

Figure 6 is a side elevation of the device of Figure 5;

Figures 7a, 7b, 7c and 7d show the device of Figure 5 in operation;

Figure 8 is a sectional elevation of the device of Figure 5, to an enlarged scale;

Figure 9 is a plan view of an alternative mushroom cutting device of the invention;

Figure 10 is a side elevation of the device of Figure 9;

Figure 11 shows a detail of Figure 9 to an enlarged scale;

Figure 12 is a plan view of yet a further alternative mushroom cutting device of the invention;

Figure 12a is a plan view showing a modification of the device of Figure 12;

Figure 13 is a front elevation of a further embodiment of the invention for use with shelving type mushroom beds;

Figure 14 is an elevation showing, to a larger scale, a detail of Figure 13;

Figure 15 is an elevation similar to Figure 14, showing a modification of the embodiment;

Figure 16 is a front elevation of the modification of Figure 15;

Figures 17 and 18 are side elevations of the apparatus of Figure 13;

Figure 19 shows a further modification of the apparatus of Figure 13;

Figure 20 is a plan view of a further embodiment of a machine for picking and cutting mushrooms, showing the apparatus at a picking location;

Figure 21 is a view similar to that of Figure 20 showing the apparatus at a packing location;

Figure 22 is a part-sectional side elevation of a picking and cutting apparatus, of the machine of Figure 20, at the picking location;

Figure 23 is a view similar to Figure 22 showing the apparatus in a translation movement from a picking location to a cutting and packing location;

Figure 24 is a view similar to that of Figure 23 showing the apparatus at the packing location;

Figure 25 is a plan view of a picking and cutting plate of the machine of Figure 20;

Figures 26A to 26D show parts of the plate of Figure 25;

Figures 27A and 27B are plan views of the cutting plate showing a cutting blade in various positions of operation; and

Figures 28 to 31 are side elevations and plan views, respectively, of a modification of the apparatus.

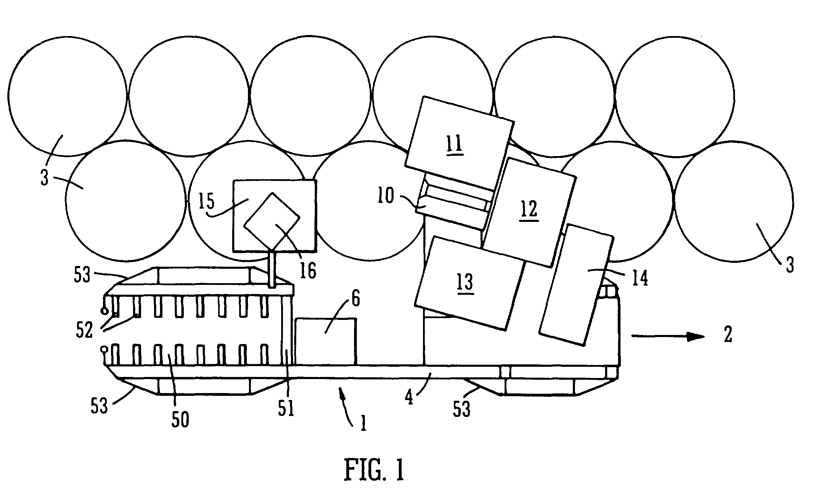

Referring to Figure 1, this illustrates a first embodiment of mushroom processing apparatus of the invention.

The apparatus comprises a wheeled trolley 1, which is adapted for movement in the direction of the arrow shown in Figure 1 along an aisle or passageway 2 which extends along the growing tunnel, parallel to, and between, rows of compost bags 3 in which the mushrooms are grown.

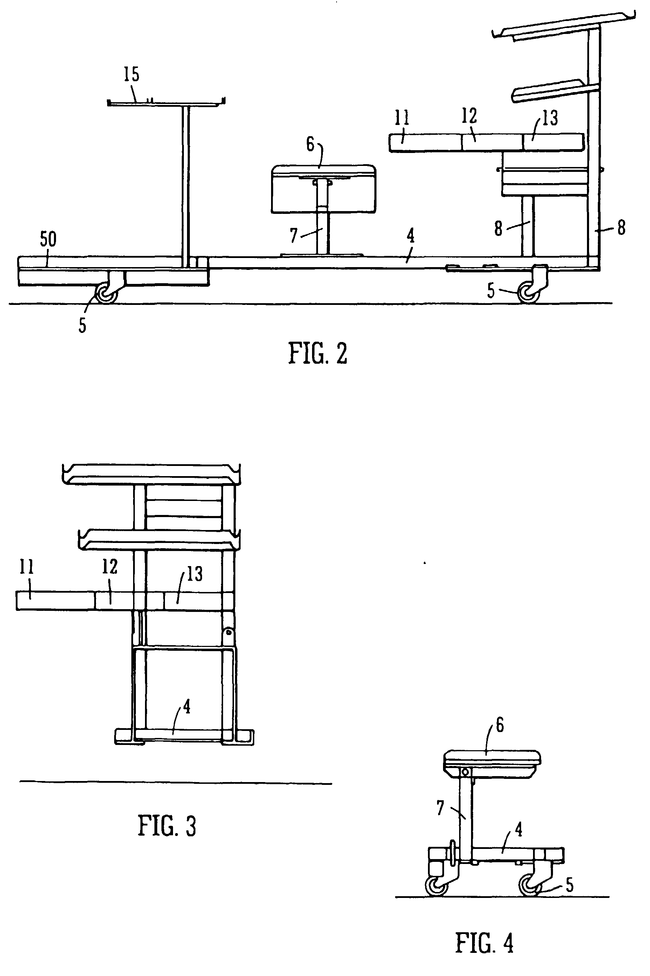

The trolley 1 comprises a frame or chassis 4 which is mounted on swivel wheels 5 (see Figure 2) by means of which the trolley may be propelled by the operator along the aisle 2.

A seat 6 is mounted on the frame 4 by means of a height-adjustable and swivelling post 7. The seat 6 is oriented such that the operator may directly face the row of bags 3 during the mushroom picking operation, i.e. facing in a direction which is at right angles to the direction of the aisle and path of travel of the trolley 1. This is in contrast to the known system, where the operator faces the direction of travel of the trolley and must twist around to pick the mushrooms.

The front of the trolley 1 has mounted thereon uprights 8 which carry processing equipment, including a mushroom cutting device 10, and a plurality of trays 11, 12, 13, 14 which are adapted to each support a plastics tub, chip or punnets into which the cut mushrooms are packed by hand by the operator. The processing equipment extends laterally from the troller over the mushroom bags. A separate tray 15 mounted rearwardly of the trolley also extends laterally from the trolley over the mushroom bags. The tray 15 is adapted to support a weighing-machine, such as a weigh cell 16 for weighing the mushrooms in the tubs.

The typical picking cycle of picking, cutting and placing the cut mushrooms in a tub requires a movement of 96 inches or 38 inches per mushroom.

The design of the picking trolley of the invention as described above allows the picker to sit/stand directly facing the mushroom beds 3 and to use both hands to select and pick mushrooms. The frame design has a number of major advantages in that it allows everything required by the picker to be conveniently located for picking mushrooms. The cutting head 10 is located over the bags 3 close to the mushrooms. The sales tubs/chips are placed beside the cutting head 10 to minimise the movement of the picker's hand after the stalks are cut, and after placing the mushrooms in the sales tubs/chips the pickers hands are close to the mushroom heads. The typical cycle for each hand in a parallel motion is 48" or 12" per mushroom, which is significantly less than with known systems.

A unique feature of the design of the frame of the trolley 1 is that it allows the operator to sit/stand with clear leg room, thus minimising damage to the mushrooms on the sides of the growing beds 3, and it provides a better working area which improves efficiency. The design of the cutting head 10 is very compact which allows the cutting head to be situated between the sales tubs.

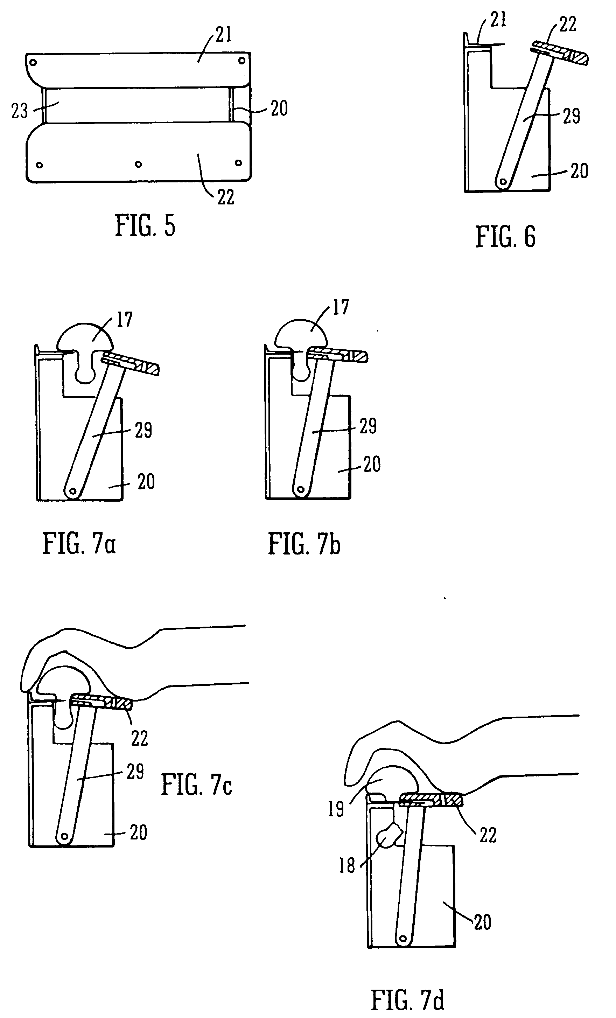

Some embodiments of mushroom cutting devices 10 are now described with reference to Figures 5 to 11 of the accompanying drawings.

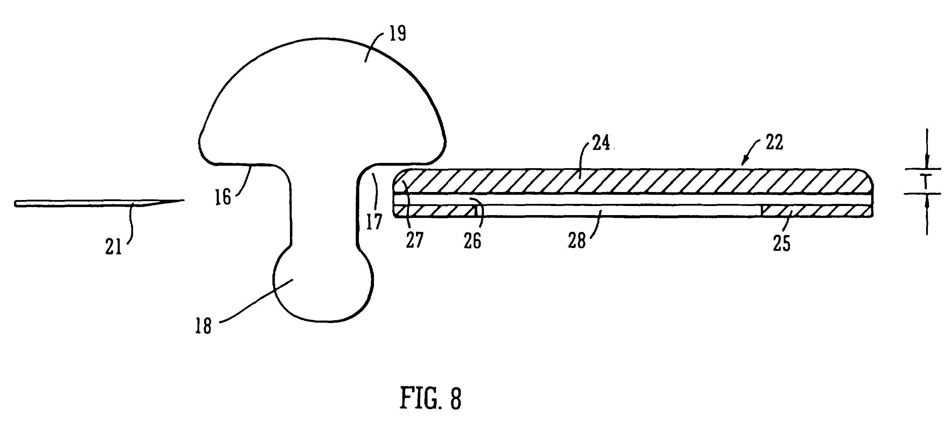

A first embodiment of a cutting device 10 is shown in Figures 5 to 8. This comprises a container 20 on a top forward portion of which is mounted an elongate fixed blade 21. The cutting edge of the blade 21 faces inwardly of the container 20. A movable blade-receiving plate 22, extends parallel to the blade 21 and is normally spaced therefrom to define an elongate aperture 23. The width of the aperture 23, in the inactive position of the device, is such that the stalks 18 of the mushroom 16 may pass through the aperture 23 but the cap 19 of the mushroom 17 is too large to pass through and rests on top surfaces of the blade 21 and plate 22 (see Figure 7a). Typically, the length of the aperture 23 is about 300mm, which accommodates about five or six mushrooms 17. A part of the cutting device 10 is shown in more detail, to an enlarged scale, in Figure 8. For safety reasons the blade 21 has a relatively blunt edge. Indeed, it has been found that with the device of the invention a satisfactory cut can be achieved with a blunt blade unlike prior art devices.

The plate 22 has an upper section 24 which is spaced from a lower section 25 to define a slot 26, which is adapted to receive the blade 21, in close fit, when the plate 22 is moved relative to the blade 21 as described below.

A forward edge 27 of the plate 22 has a radius which is greater than the radius between the vail 17 and the stalk 18 of the mushroom. The lower forward edge of the plate 24 is chamfered to accommodate the smooth entry of the blade between the plates. The plate 24 has a thickness T which is equal to the desired length of the mushroom stalk 18. The plate 25 which can be an integral part of the plate 24 is directly connected to the plate 24. The mushrooms 16 are placed in the aperture 23 between the blade and the plates. The plates 24, 25 are then moved towards the blade 21 by means described below. The plate 22 supports the stalk 18 at its top and bottom during the cutting process.

The blade length in the direction of travel is minimised to reduce any build up of debris. The lower section of plate 22 has an opening 28 in it to allow debris from the cutting operation to pass through. The upper section 24 of the plate 22 may be detached from the lower section 25, or may be movable away from the lower section 25, e.g. by hinging. This permits cleaning between the plates. Also, provision for a detachable upper plate 24 permits replacement plates, of different thickness to suit mushrooms of different stalk lengths, to be used. The blade 21 may have openings in its surface to allow debris to fall through.

As shown in Figure 6, the plate 22 is mounted on a pair of levers 29, one to each side of the container 20. The levers 29 are pivoted at their lower ends to the sides of the container 20. To operate the cutting device the picker places his hand on the plate 22, with the palm of the hand against the rear of the plate, and pushes the plate 22 towards the blade 21, to sever the caps 19 of the mushrooms 16 from the stalks 18 as described above. The cut stalks 18 fall into the interior of the container 20. The cutting sequence is illustrated in Figures 7a to 7d.

The plate 22 and pivoted levers 29 are so located that their centre of gravity is off-centre i.e. to the side of the pivot point nearest the operator. Thus, the plate 22 is pivotally biased towards the open position of the cutting device 10. This ensures that when the operator's hand is lifted from the plate 22, after cutting, the plate 22 pivots automatically to the open position without the assistance of a spring, which would be tiring on the operator. Alternatively, the plate 22 could be spring-biased to the open position.

It will be appreciated that the picker does not have to move his hand away from the area of the bags 3 from which the mushrooms are being picked to achieve the cutting motion. The picker may use both hands to pick mushrooms which are situated on the bags 3 straight in front of the picker. The picker then places the mushrooms in the aperture 23 conveniently located, and with a simple push/pull of the hand cuts the mushrooms. The device allows the mushrooms to be cut without any pressure on the delicate cap of the mushroom and with the stalk fully supported during cutting. This avoids damage to the mushroom which can greatly reduce its sales value and gives the correct stalk length which ensures that the maximum weight of mushroom is sold. The stalk is also cut very cleanly which gives a nice presentation. The sales chips are located beside the cutting head to avoid excessive hand travel while placing the mushrooms in the chip. The cutter head can be of such a size that the mushrooms do not touch each other and can be gently picked up by hand or by mechanical means after cutting.

It is believed that the fixed blade arrangement for cutting the mushrooms is novel and has a number of advantages over known methods of mushroom stalk cutting. The supermarkets, who are the main customers for mushrooms, usually specify that the mushroom stalk should not exceed about 10mm in length. Mushrooms are sold by weight, and using existing machinery the producers suffer an average loss of weight of about 10%, due to cutting the stalk too short. This is avoided by the invention which ensures that all of the stalks are cut to a predetermined length.

In the prior art machines where the mushrooms are held in apertures in conveyors, the mushroom is free to float upwardly or bob about during the cutting operation and accurate cutting is not obtained.

By means of the invention a better cut is obtained because the back of the mushroom stalk is supported by the thickness of the plate 22. There is no torque or tendency to tear the stem of the mushroom.

The thickness T of the plate 22 is in the range of from about 8mm to 14mm, and the thickness is selected depending upon the type of mushroom being picked. It is related to the length of the stem, and the thickness is about 1mm shorter than the desired cut length.

Utilising the apparatus of the invention as described above, it has been found that the picking rate of the pickers can be increased from 30lbs per hour to 60lbs per hour, and indeed in some instances up to 70lbs per hour. That is a 2-2.5 fold increase.

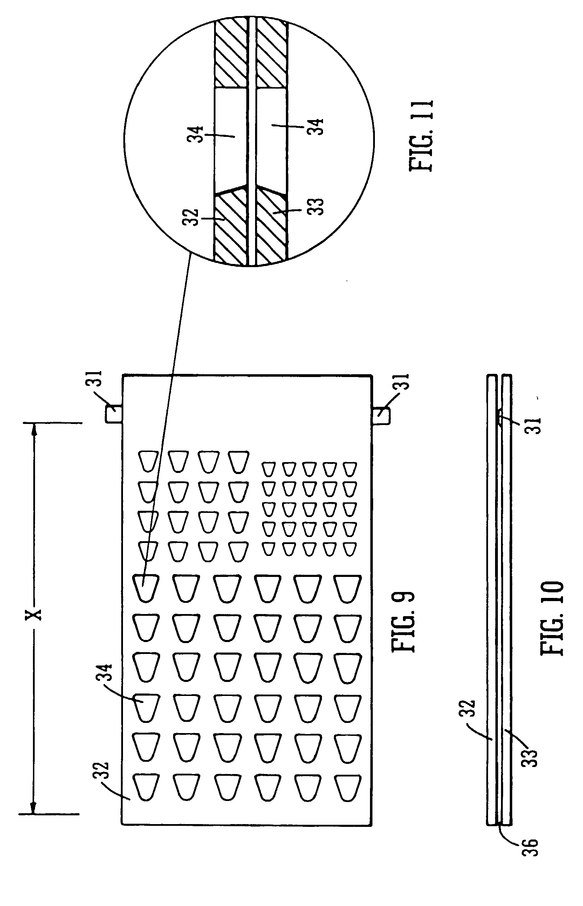

A second embodiment of the cutting device is illustrated in Figures 9 to 11. In this arrangement there are two apertured plates 32, 33 which are spaced apart a distance slightly greater than the thickness of an elongate cutting blade 31, to define a slot 36 along which the blade 31 may travel, from one end of the plates to the other through the distance X shown in Figure 9. In this arrangement each of the plates contain a plurality of triangular-shaped apertures 34; the apertures in the top plate 32 being coincident with corresponding apertures in the lower plate 33. Each aperture 34 has a larger end, and a smaller end which forms the apex of the triangle.

The picker places the mushrooms 16 in the apertures 34 with the stalks extending downwardly through the apertures. The caps of the mushrooms rest on the top surface of plate 32. The mushroom is placed in the aperture towards the centre of the larger end where there is ease of access, and the subsequent cutting motion of the blade 31 as it cuts the mushroom, pushes the stalk of the mushroom into the apex of the triangle, which locates the mushroom for subsequent ease of picking up by hand or mechanical means. The movement of the blade 31 through the distance X cuts all of the stalks accurately. The sides of the triangular aperture 34 slope outwards in an upwards direction, and the apex of the aperture finishes in a radius (see Fig. 11). This design prevents the mushroom from jamming in the hole after cutting and allows the cut mushroom to be easily removed.

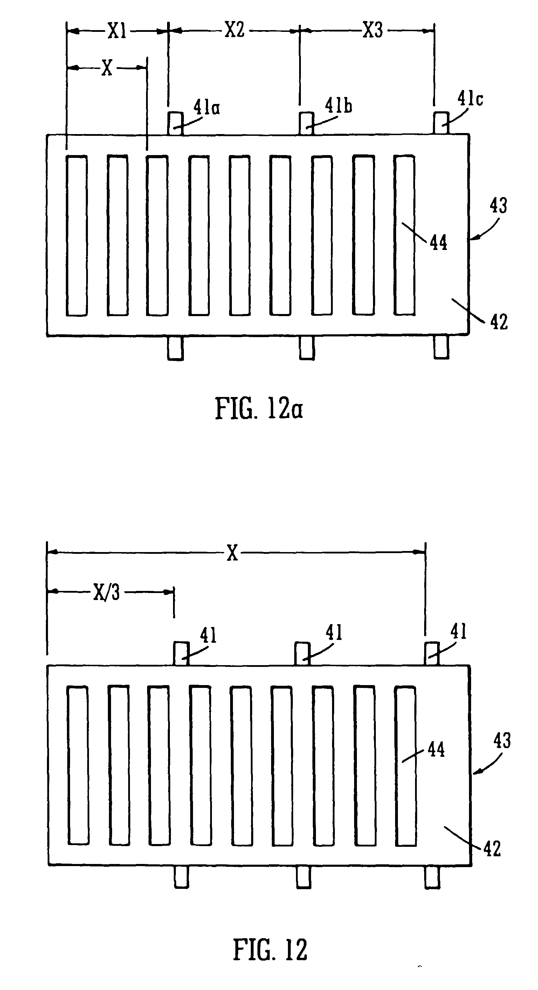

Yet a further embodiment of cutting device is illustrated in Figure 12. This is similar in construction and operation to that of Figure 9, in that two spaced apart plates 42, 43 are utilised. The plate 43 is located below the plate 42 and is not clearly visible in the drawing. However, instead of triangular apertures, the plates 42, 43 are formed with transverse slots 44 in which the mushrooms are placed. This arrangement permits multiple mushrooms to be picked and then cut in one operation, and is useful where accurate placement of the mushrooms is not required after the mushrooms have been cut.

In the embodiment of Figure 12, multiple cutting blades 41 are shown. Thus, the blades need only move between the plates 42, 43 a distance X divided by the number of blades utilised. The blades 43 are operated by means of a translation movement caused by a parallel linkage, by means of which either the blades 41 are caused to move relative to the plates 42, 43 or the plates 42, 43 are caused to move relative to the blades.

In one arrangement the cutting plates 42, 43 may be mounted on a set of parallel links. Thus, lifting of the plates 42, 43 from a position in which they are horizontal to receive the mushrooms to be cut, to a position which the plates 42, 43 are upturned to tip the cut mushroom caps into a sales tub or other receptacle, causes the blades 41 to move relative to the plates 42, 43 to sever the stalks.

A similar translation movement may be utilised with the embodiment of Figure 9.

Figure 12a illustrates a modification of the embodiment of Figure 12. In Figure 12 the blades 41 are pitched equally distant from each other, which allows the cutting of all mushrooms located in the slots 43 to be carried out simultaneously by causing the blades 41 to travel a distance of X/3 of the plate 42. However this puts a high cutting force on the operator of three time the normal load. For a repetitive operation this is very tiring. In the embodiment shown in Figure 12a, the blades are not equidistant apart. Instead, the blades 41a, 41b and 41c are placed such that

$X = X1 + $ Slot 43 width ,

$X2 = X1 + $ the thickness of one mushroom stalk ,

$X3 = X1 + $ the thickness of two mushroom stalks . Thus, with this arrangement the cutting pitch of each blade is different so that blade 41a cuts the mushroom stems first, closely followed by the other two blades, i.e. the cutting action is staggered. This design reduces the cutting force, by about one third, to the same as for the one blade design shown in Figure 9. It only requires the plate 42 to travel a distance of one third plus two stalk diameters of that required in Figure 9. This is important with certain forms of mushroom growing where space is very confined.

As discussed previously, with the prior art systems the sales tubs/chips, when packed with the cut mushrooms, are placed by the picker on the floor of the aisles, and are subsequently collected into stacks for transport to a holding refrigerator. As explained, this arrangement has a number of disadvantages. The mushrooms may be contaminated by dirt or water on the floor, and there is additional labour involved in stacking the tubs.

In accordance with another aspect of the invention, the trolley 1 includes a tub transporter, generally designated as 50 in Figures 1 to 4. This comprises a substantially rectangular horizontal open frame 51. A plurality of finger bars 52 extend transversely from the sides of the frame 51 towards the centre of the frame, which is left open. The frame 51 and the spacing of the fingers 52 are so dimensioned, that the sales tubs, when filled, may be stacked on the transporter 5. Typically, up to ten tubs may be stacked.

A specially designed and novel handcart (not shown) is provided for use with the transporter 50. The handcart, which may be narrow in width, is substantially L-shape. It comprises handles, at the top, and a lower portion which extends at right angles to the handles. The extending portion is comprised of a plurality of fingers which are designed to fit in the open space between the fingers 52 of the transporter 50. Thus, by tilting the handcart about a pair of wheels located on the bottom of the cart, in well known manner, the stack of tubs/chips of mushroom may be lifted from the transporter 50 and conveyed to the cool store.

The trolley 1 is provided, at intervals along its length, with curved bumber bars 53. These bars are equal to, or longer than, the pitch of the distance between the mushroom growing bags 3, and so prevent the trolley 1 from becoming jammed between the bags 3 as it moves along the aisle 2.

The frame 4 of the trolley 1 is open at one side such that the legs of the operator are free when the operator faces the compost bags 3 (see Figure 1). In the arrangement shown the process equipment carried on the uprights 8, together with the transporter 50 and the frame 4 form a substantially c-shaped frame, in plan, which is open in the direction in which the mushroom picking takes place.

The apparatus described above is suitable for picking mushrooms from bags. However, by using the plate type cutting devices described in Figures 9 to 12 and mounting the plate 22 (or plates 32, 33, 42, 43) on a sliding mechanism that allows the plate to be extended in over the growing bed, the apparatus can be converted for use on shelving type mushroom beds. The plate is extended in over the bed of mushrooms and then filled with uncut mushrooms. The picker then withdraws the plate from over the bed. This action cuts the stalks and the filled plate of mushrooms is emptied by the picker into the sales chips. There are a number of variations on this method i.e. a vacuum lifter can be used to pick the mushrooms directly from the plate after cutting and place them directly into the sales chip, as described below. The plate can be designed such that different areas of it are allocated to different grades of mushrooms hence the vacuum lifter can lift up preselected mushrooms and place them after cutting in correct sales chip for that grade of mushroom.

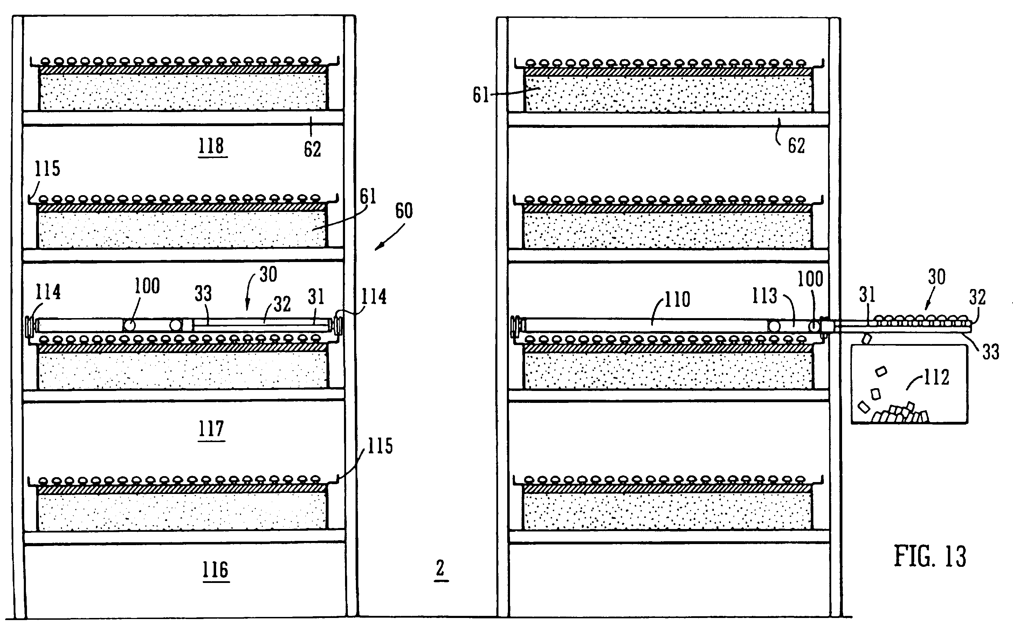

Some embodiments of apparatus of the invention for use with shelving type mushroom beds are illustrated in Figures 13 to 19 of the drawings.

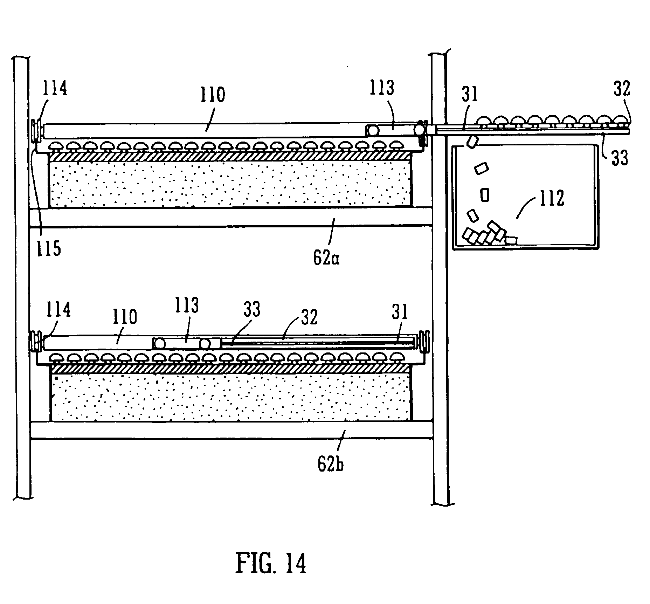

Figures 13 and 14 show a typical Dutch multitiered shelving system 60 for growing mushrooms. In this arrangement the mushrooms are grown in beds 61 arranged on tiered shelves 62 which extend the length of the mushroom house. The rows of shelving 60 are separated by aisles 2.

The cutting, and picking plate assembly 30, comprises a pair of spaced-apart parallel apertured blades 32, 33, and an elongate cutting blade 31 therebetween. The cutting device 30 is essentially the same as that described above in relation to Figures 9 to 11 or, alternatively, in relation to Figures 12 and 12a.

The cutting device 30 is mounted in a frame 113 and is provided with rollers 100 such that the device is free to run in a pair of spaced guide rails 110. The guide rails are mounted on rollers 114 which run, longitudinally, of the shelving system, on the flanged side rails 115 which are standard on the Dutch shelving system.

In use the picking and cutting plate assembly 30 is initially rolled in over a mushroom growing bed 61, as shown in the left hand row in Figure 13. The picker picks the mushrooms and places them in the apertures 34 or slots 43 of the plate assembly 32, 33 as described above. When the plate apertures or slots have all been filled with mushrooms, the picker withdraws the plate assembly which runs on the rollers 100, out from the shelf 62 into the aisle 2. This action causes the plates 32, 33 to move relative to the blade 31, to sever the mushroom caps from the stalks. The cut stalks fall into a container 112, while the caps are retained on the upper plate 32.

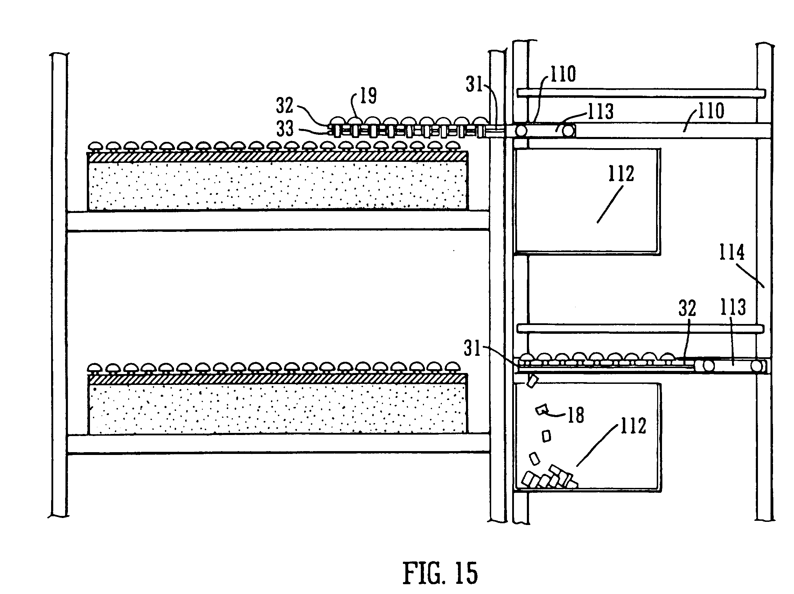

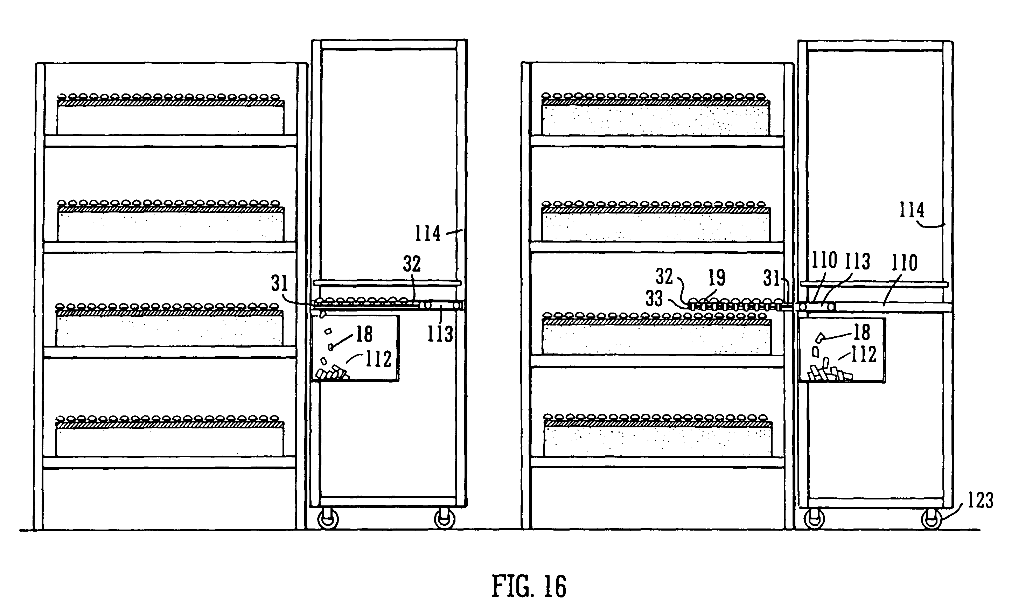

Figure 14 shows the plates 32, 33 in the fully withdrawn position at the upper shelf 62a, and in the picking position at the lower shelf 62b. The container 12 may be mounted on a trolley on rollers 114 which is adapted for movement along the aisles 2 between the shelving tiers, of the kind shown in Figures 15 and 16. Typically the trolley will accommodate sales tubs etc. as described above in relation to Figures 1 to 4.

The embodiment shown in Figures 15 and 16 is similar to that described with reference to Figures 13 and 14, except that this embodiment is adapted for use with shelving systems not provided with the side rails 115 of the Dutch system. In this arrangement the frame 113 and guide rails 110 carrying the picking and cutting assembly are all mounted on a wheeled trolley 114, as shown in Figure 16. Otherwise, the device operates as described with reference to Figures 13 and 14.

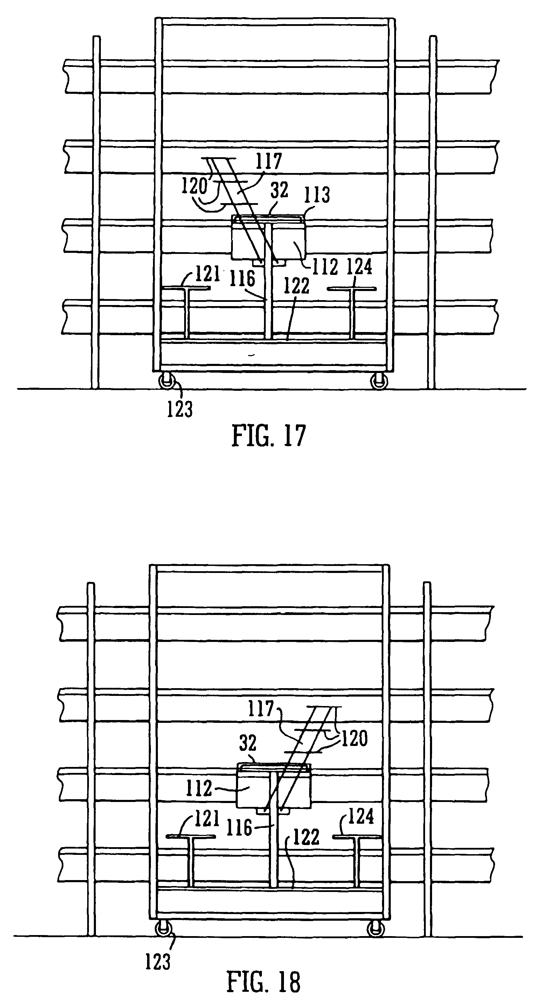

Figures 17 and 18 are side views of the trolley 114. The trolley 114 is mounted on wheels 123, which may be driven either by a pedal and chain system (not shown) or may be motorised. The picking and cutting assembly 31, 32, 33 is either mounted centrally of the trolley 114 (as in the embodiment of Figures 15 or 16) or on the side rails 115 of the shelving (Figures 13 and 14). The container 112 is mounted on an upright 116.

The upright 116 also carries a plurality of shelves 120 for supporting sales chips for receiving the cut mushrooms. The shelves 120 are mounted on a pentagraph frame 117 which is pivotally mounted on upright 116. The pentagraph frame 117 enables the shelves 120 to be swung from the position shown in Figure 17 to that shown in Figure 18.

The trolley may be provided with at least one, but preferably, two, seats 121 and 124, on one of which the picker may sit while picking the mushrooms on the shelves 61. The cut mushrooms are placed by the picker in sales chips placed on the shelves 120. The picker may choose to sit on either seat 121 or 124 and may move the pentagraph frame 117 accordingly. For example, if sitting on seat 124 the frame would normally be in the position shown in Figure 17. The pentagraph frame 117 would be moved to the opposite side of the picking and cutting assembly, as shown in Figure 118, when sitting on seat 121.

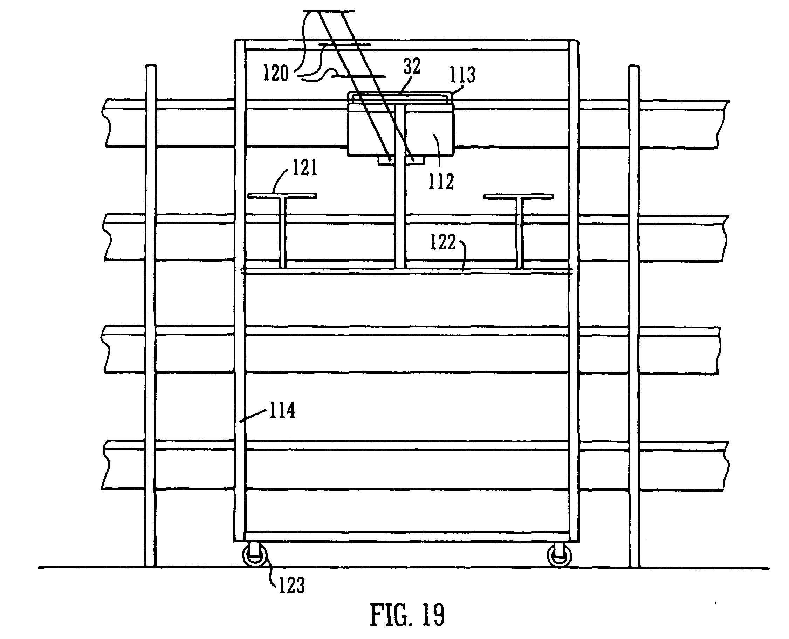

Figure 19 illustrates means for raising the picking and cutting assembly and associated seating and packing equipment, on the frame 114, to a higher level to gain access to higher shelves 62 of the shelving system 60. This may be achieved by carrying the apparatus on a floor member 122 which is raised, in well known manner, by hydraulic or pneumatic lifting means, or by a motorised lift.

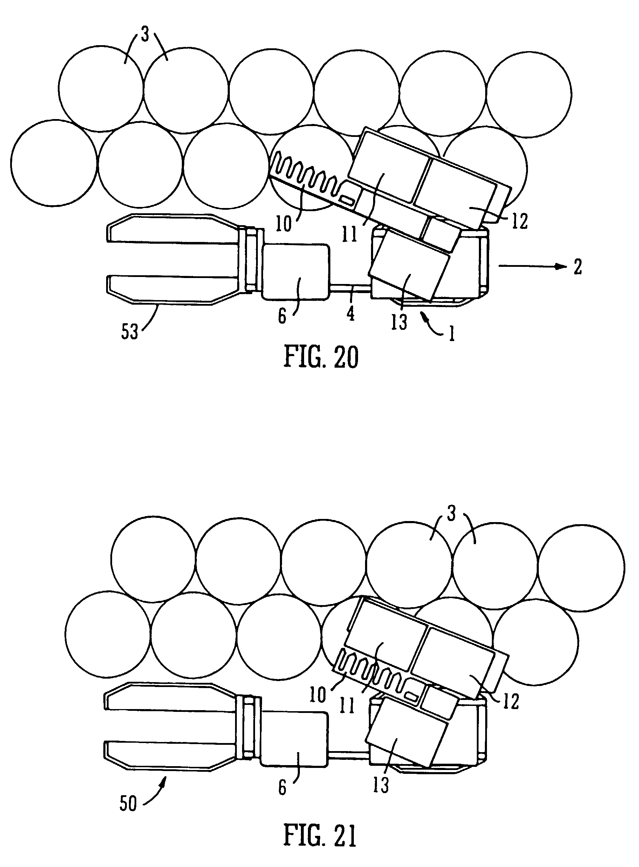

A further embodiment of the invention is shown in Figures 20 to 27.

Referring to Figures 20 and 21, these show the apparatus of the invention mounted on a wheeled trolley 1. The trolley 1 is substantially similar to that described above in relation to Figure 1, and like reference numerals denote like parts.

The cutting device or plate 10 in this embodiment is different from that previously described. It is shown in Figure 20 in a position in which it extends over the growing beds 3 for receiving picked mushrooms. It is movable, as will be described more fully below, by means of a rearward and upward translation movement, to the position shown in Figure 21 where it is adjacent to trays 11, 12, 13, to facilitate the removal of cut mushrooms from the cutting plate 10 and the placing of the cut mushrooms in the trays.

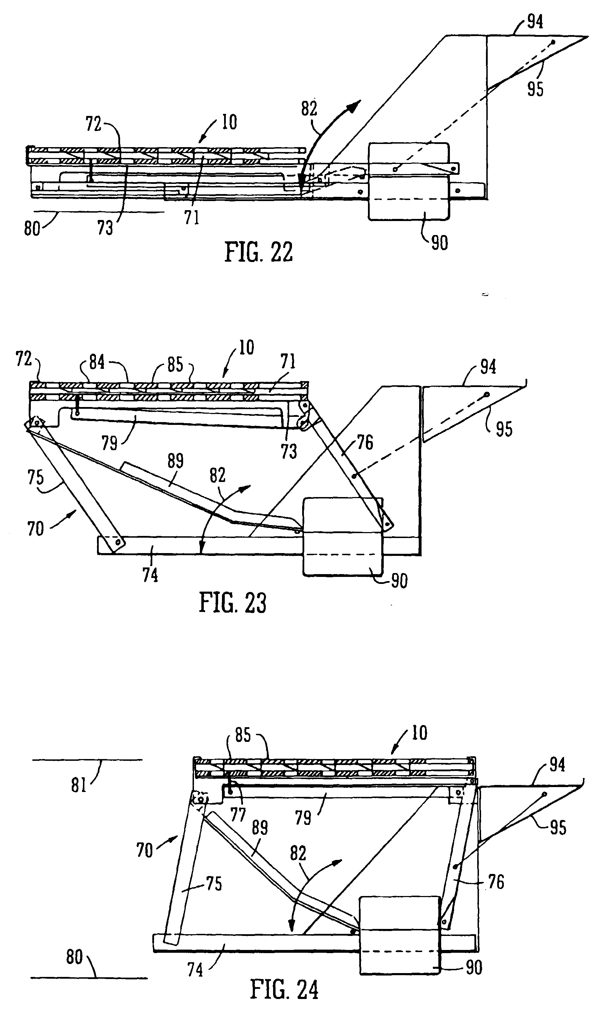

As shown in Figures 22 to 24, the cutting plate 10 is mounted on a pantograph-like frame 70, which is based on the geometry of a parallelogram. The frame 70 comprises a base plate 74, which is mounted on the trolley 1. A pair of front arms 75 are pivotally connected, at each end, between the front of the cutting plate 10 and the front of the plate 74. Likewise a pair of rear arms 76 are pivotally connected between the rear of the cutting plate 10 and the rear of the plate 74. The arms 75 and 76 move parallel to each other.

Figure 22 shows the plate 10 in its lowermost position, where it is extended over, and positioned adjacent to mushrooms growing in the bags 3. The line 80 in Figure 22 generally indicates the level of mushrooms growing in the bags 3. The plate 10 may be raised, by hand, rearwardly and upwardly, in the direction of the arrow 82, through the position shown in Figure 23 to the position shown in Figure 24 where it is positioned adjacent the trays 11, 12, 13 (see also Figures 20 and 21). During this movement the arms 75, 76, which move parallel to each other, control the upward and rearward movement. The lines 80 and 81, in Figure 24, indicate the mushroom level and the level of the packing trays, respectively. Typically, the movement from the position of Figure 22 to the position of Figure 24 involves an upward movement of about 240 mm and a rearward movement of about 250 mm.

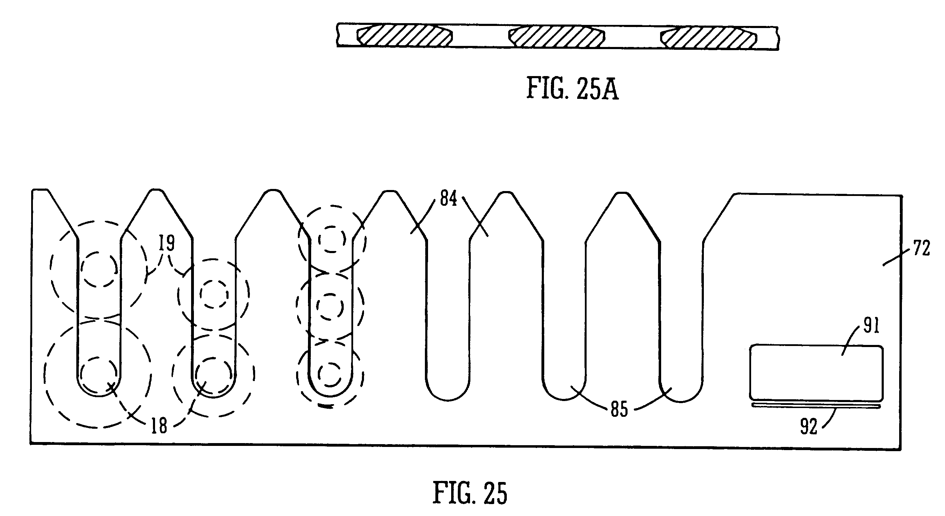

The cutting plate 10 is shown in more detail, to an enlarged scale, in Figures 25 to 27 which show the parts of the plate 10 disassembled.

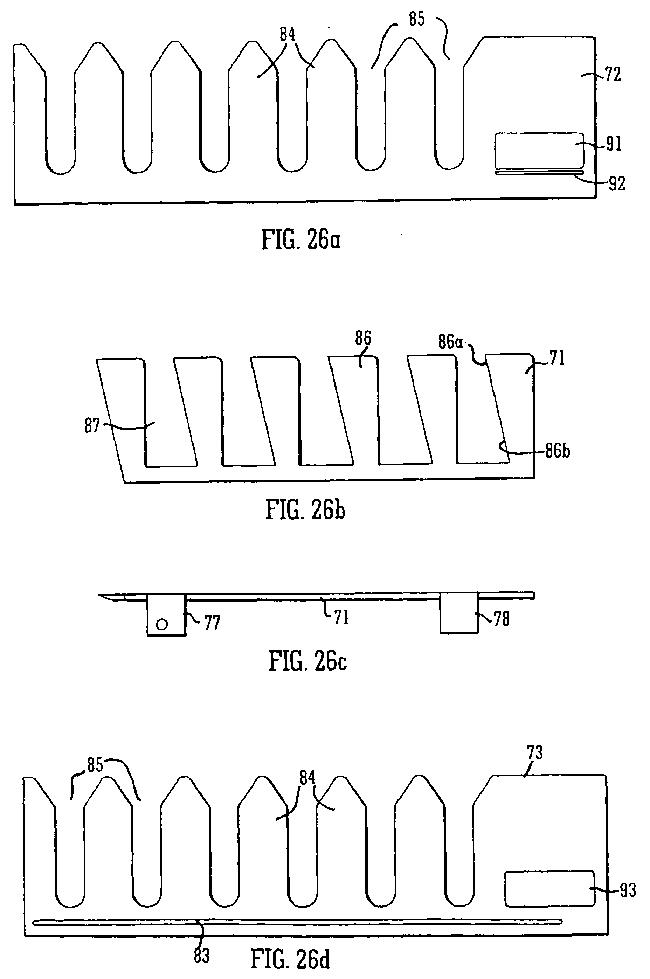

The cutting plate comprises a top plate 72 (Figure 26A), a cutting blade 71 (Figures 26B and C), and a bottom plate 73 (Figure 26D). The plates 72, 73 and the blade 71 are planar, and are assembled by placing the plates 72 and 73 on top of each other with the blade 71 sandwiched between the two plates. The blade 71, which is shown in plan in Figure 26B and in elevation in Figure 26C, has downwardly extending brackets 77 and 78. These fit through a longitudinal slit 83, formed in the lower plate 73, such that the blade 71 may slide laterally between the plates 72, 73.

Each of the plates 72, 73 is provided with a plurality of fingers 84 which define between them a plurality of open slots 85. The slots are so dimensioned to receive the stalks 18 of picked mushrooms with the caps 19 of the mushrooms resting on the top plate 72 (see Figure 25). When the cutting plate 10 is assembled, the fingers and slots 84, 85 of the top plate 72 are coincident with those of the bottom plate 73 such that the mushroom stalks 18 can extend downwardly through both slots.

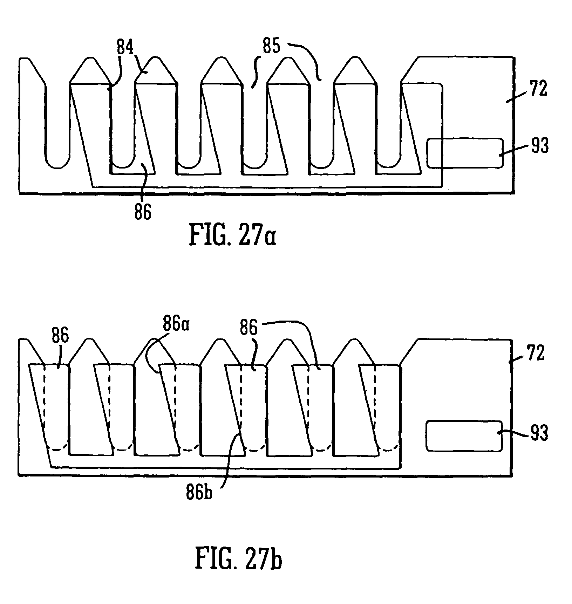

The blade 71 has a plurality of complementary cutting fingers 86 which define slots 87 therebetween. In the picking position of the apparatus (Figure 22) the apertures 87 of the blade are also disposed coincident with the slots 85 of the plate 72 such that the mushroom stalks can pass through all of the slots 85, 87 (see Figure 27A).

However, when the cutting plate 10 is moved from the picking position (Figure 22) through a cutting position (Figure 23) to a packing position (Figure 24) the blade 71 is caused to move laterally of the plates 72, 73, by a suitable linkage to cause the blade fingers 86 to move across the slots 85 (shown in Figure 27B) to cut through mushroom stalks 18 extending downwardly through the slots 85.

It will be noted from Figure 26B that the cutting edge of each cutting finger blade 86 is inclined away from the direction of travel to provide a leading cutting edge 86a and a trailing cutting edge 86b. This has the effect that where a plurality of mushroom stalks 18 are held in any one aperture 85 (as shown in Figure 25) they are not all cut through simultaneously. Instead, as will be apparent from Figure 27B, the leading cutting edge 86a will cut through the outermost stalk 18 before the trailing cutting edge 86b begins to cut through the innermost mushroom stalk 18, i.e. the cutting action is staggered. This arrangement reduces the cutting force on the blades and enables the operator to effect the cutting operation more easily.

Figure 25A shows to a enlarged scale, a cross-sectional detail of the fingers 84. It will be noted that the top and bottom edges of each of the fingers 84 of the upper plate 72 are chamfered. The purpose of the chamfer 88 on the top surface is to control the length of mushroom stalk 18 depending through the slots 85, 87. The larger the diameter of the mushroom cap 19, the further up the chamfer it will sit which reduces somewhat the length of stalk 18 depending through the slots 85, 87. On the other hand, the caps 19 of smaller mushrooms will sit lower down the chamfer and so more of the stalks will depend downwardly through the slots 85, 87. This ensures that the mushroom stalks 19 are cut to a relatively uniform length (as required by supermarkets) irrespective of the size of the mushroom.

The operation of the apparatus is now described.

During the picking of the mushrooms 16 from the bags 3, the apparatus is positioned as shown in Figures 21 and 22 with the cutting plate 10 positioned adjacent the top of the growing bags 3. The picker has both hands free to pick the mushrooms and slides the picked mushrooms into the slots 85 (in the manner shown in figure 25) with the caps 19 of the mushrooms resting on the top surface of the plate 72. Because the mushrooms can slide into the open slots 85, instead of pushing the mushrooms down through holes, the dirty bottom part of the mushroom stalk 18 does not come into contact with the top surface of the plate 72, which is thus easier to keep clean and avoids contamination of the mushroom cap 19.

When the picker has filled all of the slots 85 with mushrooms, the cutting plate 10 is pulled upwardly and rearwardly from the position shown in figure 22, in the direction of the arrow 22 to that shown in Figure 24.

It will be noted from Figure 23 that the bracket 77 of the blade 71 (see Figure 26C) is pivotally connected to one end of a link 79. The other end of link 79 is pivotally connected to a bracket attached to the upper end of arm 76. Thus as arm 76 is raised from a folded position of figure 22 to an extended position of Figure 23, the link 79 is caused to push forward to move the blade 71 across the apertures 85 to cut the mushroom stalks as described above. The second bracket 78 on the blade 71 is a guide bracket to guide the blade 71 along the slot 83 (Figure 26D).

As the mushroom stalks 18 are cut from the caps 19, they fall onto a chute 89, which directs the stalks into a container 90, located adjacent the base plate 74. The chute 89 is pivotally connected between the arm 75 and the container 90 so that it can fold and unfold as the cutting plate 10 is moved between the picking and packing positions.

The plate 72 is provided with an aperture 91, which has an upstanding blade 92 disposed along one edge of the aperture 92. A corresponding aperture 93 is formed in the lower plate 73. Mushrooms which are too small to fit in the slots 85, can be cut by pressing them on the blade 92 and depositioning the stalks in aperture 91 from where they fall through aperture 93 into the container 90. A plate 94, supported by a bracket 95, is provided to hold a tub to receive these small mushrooms.

The cutting plate now is in the packing position shown in Figure 21, that it is positioned adjacent the trays 11, 12, 13 which support sales tubs to receive the cut mushrooms. The picker then removes the mushroom caps from the cutting head 10 and places them in the tubs. The cutting head 10 is then pushed forward and down to the position shown in Figure 22 so that picking can commence again.

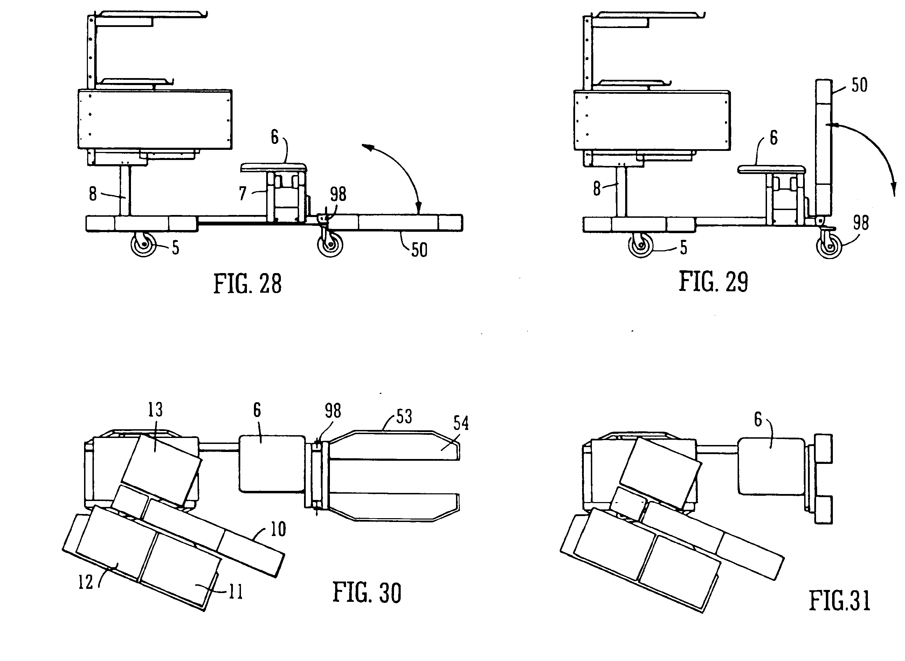

Figures 28 to 31 show a modification of the trolley 1 of Figures 1 and 20, where like numerals denote like parts. In this embodiment the tub transporter 50 which is attached to the back of the trolley 1 is pivotally attached to the rear of the trolley by means of a pivot 98, such that it may be swung upwardly from a substantially horizontal position to a substantially vertical position as shown by the arrow in Figure 29. This arrangement has the advantage that the overall length of the trolley may be reduced (e.g. from about 2.2 m to 1.4 m) by pivoting the transporter 50 to the vertical position shown in Figures 29 and 31, which can be useful when negotiating the trolley around corners and the like. Also in this embodiment the fingers 52 of the embodiment of Figure 1 are replaced by two flanges 54 which carry the tubs. An open space between the flanges 54 receives the handcart previously described.

The embodiment of Figures 20 to 27 has a number of advantages over prior art devices, and also over some of the previous embodiments of the invention. In particular, this embodiment gives increased productivity, and cleaner mushrooms. In typical prior art devices, the picker has to move his/her hands through 131 inches of travel to pick 2 or 3 mushrooms. The embodiments of Figures 1 to 8 enable 4 mushrooms to be picked for 66 inches of travel. This embodiment achieves a picking rate of 12 mushrooms for 126 inches of travel.

The industry average for mushroom picking using prior art devices is about 35 lbs/hr. With the invention this can be at least doubled up to a minimum of 70 lbs/hr to a maximum of about 140 lbs/hr for a very good picker.

**Claims**

1. Apparatus for picking and cutting mushrooms comprising at least one cutting blade (21, 31, 41, 71), a blade receiving plate (22, 32, 42, 72), and at least one aperture or slot (23, 36, 44, 85) associated with the plate which is adapted to receive mushrooms (16) for cutting, with the caps (19) of the mushrooms (16) held on a top part of the plate and the stem (18) of the mushrooms extending through the aperture, and means for moving the plate (22, 32, 42, 72) and/or the blade (21, 31, 41, 71) relative to each other to cut the mushroom stalks (18) held in said aperture (23, 36, 44, 85).

2. Apparatus as claimed in claim 1, wherein there are two parallel plates (24, 25; 32, 33; 42, 43; 72, 73) which define a slot (26, 36) therebetween which is adapted to receive the cutting blade (21, 31, 41, 71) or a plurality of cutting blades, and the plate(s) are provided with one or a plurality of apertures or slots for receiving the mushrooms to be cut, and cutting is achieved by moving the plate(s) relative to the blade(s).

3. Apparatus as claimed in any of the preceeding claims, including means for mounting the plate and blade assembly such that it may be extended over mushroom beds (61) to receive the picked mushrooms in the apertures and withdrawn from the beds (61) for removal of the picked mushrooms, the withdrawal action causing relative movement of the plates (30, 32) and blade (31) to sever the mushroom stalks (18).

4. Apparatus for use in picking and cutting mushrooms having a cutting head (10) comprising an upper plate (72), and a lower plate (73), a blade (71) mounted between the plates (72, 73) and slidable between the plates (72, 73), wherein each plate (72, 73) has a plurality of complementary fingers (84) which define slots (85) therebetween, said slots (85) being dimensioned to receive a plurality of mushrooms (16) with the caps (19) resting on the upper plate (72) and the mushroom stalks (18) extending downwardly through the slots (85) in the plates (72, 73), and means to move the blade (71) across the slots (85) to sever the mushroom stalks (18).

5. Apparatus as claimed in claim 4, wherein the cutting head (10) is mounted on a pantograph frame (70) such that it may be moved from a picking position rearwardly to a higher packing position, and the frame (70) includes a linkage (76, 79) such that the upward and rearward movement of the frame (70) causes the blade (71) to move across the slots (85) to sever the mushroom stalks (18).

6. Apparatus as claimed in any of claims 2 to 4, including a plurality of cutting blades (41, 71) wherein the cutting pitch of each blade is different whereby the cutting action is staggered and the blades do not cut simultaneously.

7. Apparatus as claimed in any of the preceding claims, wherein means, such as a chamfer, is provided on the plate (22) or plates (42, 72) to control the length of mushroom stalk (17) cut by the cutting blade(s).

8. Apparatus for use in picking and processing of mushrooms comprising a wheeled trolley (1) which is adapted for movement along aisles (2) between mushroom growing beds (3), a seat (15) on the trolley (1) which enables a mushroom picker to sit facing the mushroom growing beds (3), substantially at right-angles to the direction of travel of the trolley, mushroom processing equiptment projecting laterally from the trolley (1) and adapted, in use, to extend over the mushroom growing beds (3), said equiptment including a mushroom cutting device (10) as claimed in any of the preceding claims.

9. Apparatus as claimed in claim 7, wherein the trolley (1) has a frame which is open on one side to permit freedom of movement of the legs of the operator when sitting facing the mushroom growing beds (3).

**EP 0 954 988 A1**

10. Apparatus as claimed in claim 8 or claim 9, wherein the trolley (1) includes a tub transporter (50) optionally comprising a horizontal open frame having a plurality of spaced fingers (52) or flanges (54) extending from the sides of the frame upon which a plurality of mushroom-containing tubs may be stacked, and wherein the tub transporter (50) is pivotable from a substantially horizontal position to a substantially vertical position.

EP 0 954 988 A1

FIG. 1

FIG. 2

FIG. 3

FIG. 4

FIG. 5

FIG. 6

FIG. 7a

FIG. 7b

FIG. 7c

FIG. 7d

FIG. 8

FIG. 9

FIG. 11

FIG. 10

EP 0 954 988 A1

FIG. 12a

FIG. 12

FIG. 13

EP 0 954 988 A1

FIG. 14

FIG. 15

FIG. 16

EP 0 954 988 A1

FIG. 17

FIG. 18

FIG. 19

FIG. 20

FIG. 21

FIG. 22

FIG. 23

FIG. 24

FIG. 25A

FIG. 25

EP 0 954 988 A1

FIG. 26α

FIG. 26b

FIG. 26c

FIG. 26d

FIG. 27a

FIG. 27b

FIG. 29

FIG. 28

FIG.31

FIG. 30

**European Patent Office**

**EUROPEAN SEARCH REPORT**

Application Number

EP 99 20 1292

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 2 638 949 A (BLEVINS) 19 May 1953 (1953-05-19) | 1,2 | A23N15/04 A01D45/00 |
| A | * column 4, line 50 - column 5, line 52 * | 4 | |
| A | NL 9 202 065 A (HENDRIK FOCKENS) 16 June 1994 (1994-06-16) * the whole document * | 1 | |
| A | US 5 463 858 A (CIUFFETELLI ANDREW J) 7 November 1995 (1995-11-07) * the whole document * | 1 | |
| A | WO 96 39019 A (KENSAL LIMITED ;RUSSELL LEE SHERIDAN (GB)) 12 December 1996 (1996-12-12) * page 3, paragraph 1 * * page 5, line 16 - page 6, line 2 * * page 6, line 24 - page 7, line 17 * | 8,10 | |
| A | EP 0 100 207 A (GARRAN ENTERPRISES LTD) 8 February 1984 (1984-02-08) | | TECHNICAL FIELDS SEARCHED (Int.Cl.6) |
| A | FR 2 678 803 A (CHER SICA VAL) 15 January 1993 (1993-01-15) | | A23N A01D A01G |
| A | EP 0 410 073 A (KUEHLMANN JOSEF) 30 January 1991 (1991-01-30) | | |

The present search report has been drawn up for all claims

| Place of search | Date of completion of the search | Examiner |
|---|---|---|
| THE HAGUE | 3 August 1999 | De Lameillieure, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

ANNEX TO THE EUROPEAN SEARCH REPORT
ON EUROPEAN PATENT APPLICATION NO.                    EP 99 20 1292

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-1999

| Patent document<br>cited in search report | | Publication<br>date | Patent family<br>member(s) | | Publication<br>date |
|---|---|---|---|---|---|
| US 2638949 | A | 19-05-1953 | NONE | | |
| NL 9202065 | A | 16-06-1994 | NONE | | |
| US 5463858 | A | 07-11-1995 | NONE | | |
| WO 9639019 | A | 12-12-1996 | AU | 6009596 A | 24-12-1996 |
| EP 0100207 | A | 08-02-1984 | AU<br>CA<br>US | 1715683 A<br>1213442 A<br>4545186 A | 26-01-1984<br>04-11-1986<br>08-10-1985 |
| FR 2678803 | A | 15-01-1993 | NONE | | |
| EP 0410073 | A | 30-01-1991 | DE<br>AT<br>DD<br>DK<br>GR<br>SU<br>US | 3924870 C<br>83888 T<br>295604 A<br>410073 T<br>3007196 T<br>1777549 A<br>5081920 A | 26-07-1990<br>15-01-1993<br>07-11-1991<br>08-03-1993<br>30-07-1993<br>23-11-1992<br>21-01-1992 |

EPO FORM P0459

For more details about this annex : see Official Journal of the European Patent Office, No. 12/82